# EUROPEAN PATENT SPECIFICATION

(11) **EP 2 483 160 B1**
(45) Date of publication and mention of the grant of the patent: **15.01.2014**
(21) Application number: 10774278.5
(22) Date of filing: 29.09.2010
(51) Int. Cl.: B65B 9/06

(54) **MACHINE FOR PACKING INFUSION PRODUCTS INTO CAPSULES AND FEATURING SEALING UNIT**
MASCHINE MIT EINER VERSIEGELUNGSEINHEIT ZUR VERPACKUNG VON AUFBRÜHBAREN PRODUKTEN IN KAPSELN
MACHINE DE CONDITIONNEMENT DE PRODUITS À INFUSER DANS DES CAPSULES, COMPORTANT UNE UNITÉ DE SCELLEMENT

(30) Priority: 02.10.2009 IT BO20090637
(43) Date of publication of application: 08.08.2012
(73) Proprietor: IMA INDUSTRIES S.R.L., 40064 Ozzano dell' Emilia (BO) (IT)
(72) Inventor: CONTI, Roberto, 40026 Imola (IT)
(74) Representative: Lanzoni, Luciano
(86) International application number: PCT/IB2010/054384
(87) International publication number: WO 2011/039709

(56) References cited:
- EP-A1- 0 468 079
- WO-A1-02/102668
- WO-A1-03/051715
- WO-A1-2008/050865
- DE-U- 1 915 044

## Description

### Technical Field

This invention relates to a machine for packing infusion products, such as coffee, for example, into capsules of hard plastic material.

The capsules which this specification refers to in particular have a zone for receiving a product charge enclosed between a first closed end and a second open end which is designed to be sealed by a length of film (heat)sealed to the outside area (usually circular) of the capsule.

Each individual capsule may also be enclosed in an individual flexible overwrap or flow pack closed by (heat)sealing.

### Background Art

Packaging machines of this type currently available on the market have a succession of stations, usually integrated in a sealed compartment with controlled atmosphere.

The main stations of these machines are basically arranged as follows along a line of machine extension:
a first station comprising a first roll for continuously feeding first (heat)sealable sealing film for sealing the second end of each capsule and a second roll for feeding a second overwrapping film used to make the overwrap;
a second station for feeding capsules to be placed on conveyor members or carrier blocks featuring seats for receiving the capsules positioned with the second end facing upward and moved stepwise along the line of machine extension;
a third station for filling the advancing capsules with charges of the infusion product;
a fourth station for sealing the second ends of the capsules with respective pieces of the first film;
a fifth station for picking up the capsules from the carrier blocks and placing them on a continuous web of the second, overwrapping film;
a sixth station for sealing individual portions of overwrapping film each enclosing a capsule;
a seventh station for picking up the packs made and feeding the packs into an eighth and final station for packaging them into boxes containing a plurality of the products.

Starting from this succession of machine stations, the station of particular relevance to this specification is the station for sealing the capsules within an overwrapping film.

At present, prior art overwrap sealing stations comprise means for individually placing or, (depending on the type of machine), gravity feeding the capsules on the overwrapping film after the capsules have been filled and sealed with film. In a first case, the capsules are released onto one side of the advancing overwrapping film while the latter is still open and in the form of a flat web; in a second case, each capsule is released into the overwrapping film after the latter has been folded at least into two and has an access zone for the capsule. In both cases, the advancing web of overwrapping film determines the subsequent feeding of the capsules resting on the overwrapping film itself towards: the longitudinal sealing station for sealing the overwrapping film lengthways; the transversal sealing station for forming individual packs; and the cutting station for separating the packs from each other.

A station of the type just described for sealing the capsules within the overwrapping film has a major drawback due to the step of releasing the capsules onto or into the web of overwrapping film freely and without holding them in place.

This step is critical because it affects the quality of the end product: the position of the overwrapping film portion relative to the capsule inside it must be very precise because the subsequent sealing operations, in particular the transversal ones, must be performed with the capsule in a substantially central position relative to the seals.

The correct relative position between capsule and overwrapping film portion is not always achieved because the overwrapping film is fed forward at a relatively high speed while the capsule placed on it is moving either at zero speed or at a very low speed, thus causing inertial instability of the capsule at the moment it touches the overwrapping film and is fed forward together with the latter.

To this must be added the fact that constant increases in machine productivity accentuate these speed differences, increasing the risk of the capsules being displaced as they travel towards the sealing stations and in turn leading to higher risks of packs not meeting end product quality parameters.

EP 0468079 discloses a machine according to the preamble of claim 1.

### Disclosure of the Invention

This invention therefore has for an aim to overcome the above mentioned disadvantages by providing a machine for packing infusion products into capsules which offers high productivity per unit time and finished capsules of high quality and whose overall dimensions are reduced.

According to the invention, the above aim is achieved by a machine for packing infusion products into capsules as described in claim 1.

### Brief Description of the Drawings

The technical features of the invention, according to the above aims, are more apparent from the detailed description which follows, with reference to the accompanying drawings which illustrate a non-limiting example embodiment of the invention and in which:
Figure 1 is a schematic side view of a machine for packing infusion products into capsules according to the invention;
Figure 2 is a perspective view of a capsule with overwrapping made by the machine of Figure 1;
Figure 3 is a perspective view of a sealed capsule made by the machine of Figure 1;
Figure 4 is a scaled-up side view, with some parts in cross section, of a detail of the sealed capsule of Figure 3;
Figures 5, 6 and 7 are schematic side views from the side opposite that of Figure 1, with some parts cut away and others in cross section, of a part of a station for feeding empty capsules forming part of the machine of Figure 1 in three different operating configurations;
Figure 8 is a schematic perspective view of the machine of Figure 1, with some parts cut away for clarity;
Figure 9 shows a sealing film in a perspective view which is scaled up compared to Figure 8;
Figure 10 is a schematic side view of a capsule coupling and sealing station forming part of the machine of Figure 1;
Figure 11 is a schematic top plan view of the coupling and sealing station of Figure 10, with some parts cut away in order to better illustrate others;
Figure 12 is a schematic side view of a sealing device forming part of the capsule coupling and sealing station of Figures 10 and 11.

### Detailed Description of the Preferred Embodiments of the Invention

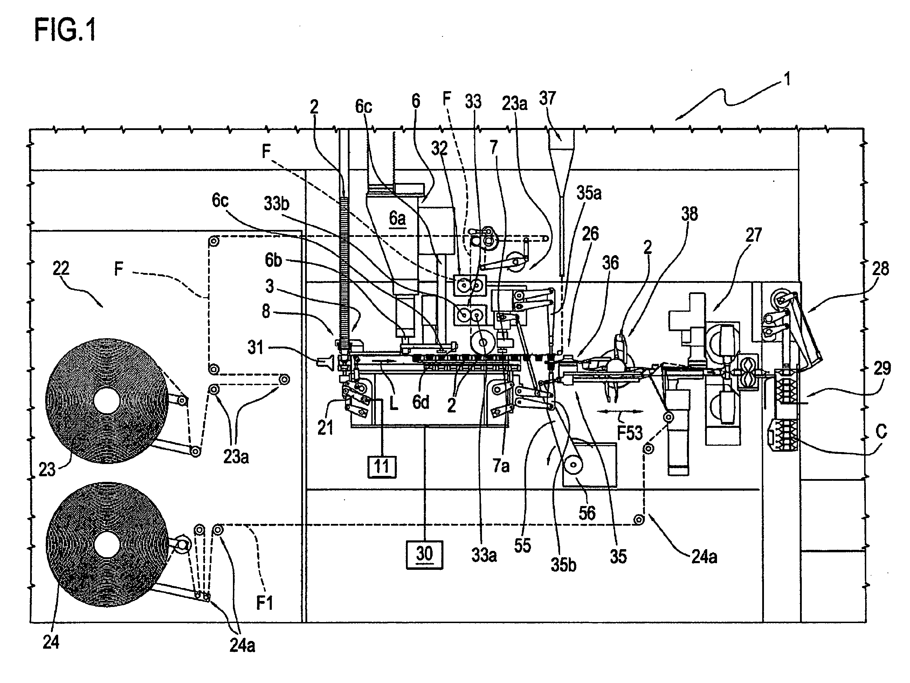

Figure 1 illustrates a machine 1 designed to pack infusion products, such as coffee, into capsules 2 and to individually wrap the latter in an overwrap 25, or "flow pack" of flexible paper, plastic or other material.

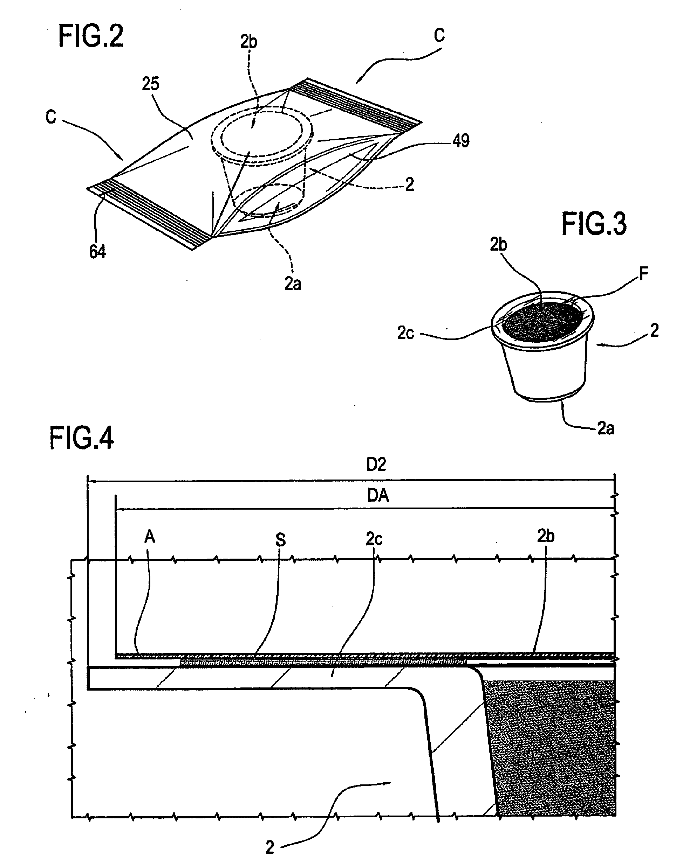

The capsule 2 (shown in Figures 2, 3 and 4) is, by way of a non-limiting example only, frusto-conical in shape, with a first end, namely a circular minor base 2a, which is closed, and a second end, namely a major base 2b which is open (and which will be sealed by a sealing portion A of a first sealing film F, as described in more detail below) and is provided with a protruding annular rim or collar 2c forming a sealing contact base for the sealing portion A of sealing film F.

The machine 1 comprises a series of stations for manipulating, filling, sealing and overwrapping the capsules 2 and all enclosed within a zone in a controlled atmosphere (using nitrogen, for example) so as to preserve the chemical and physical qualities of the product, for example, aroma in the case of coffee.

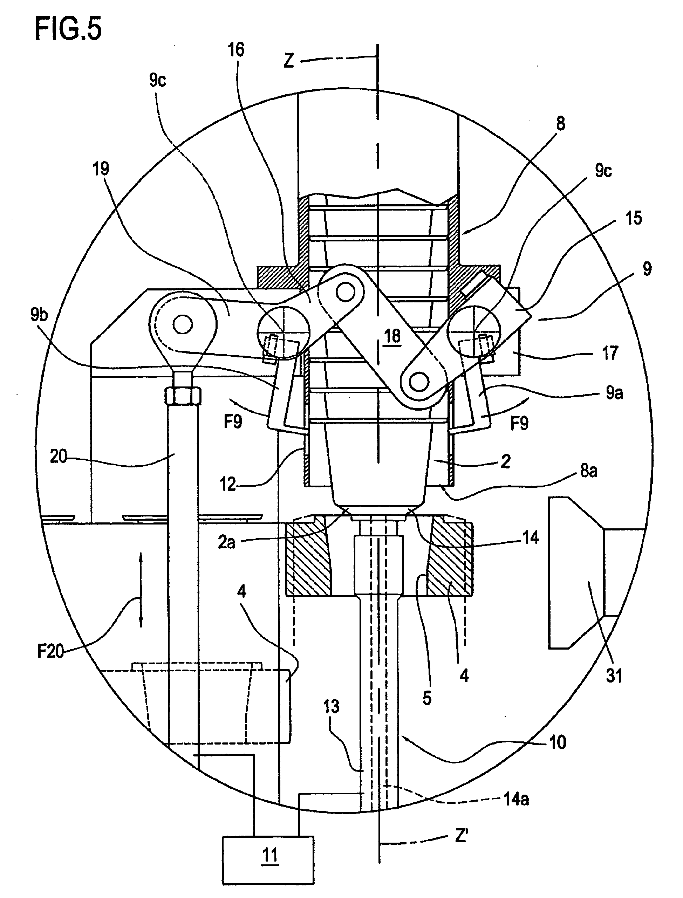

More in detail, these stations, arranged along a line L of product feed, are the following:
a first station 22 comprising a first roll 23 for continuously feeding first (heat)sealable sealing film F for sealing the major base 2b of each capsule 2 and a second roll 24 for feeding a second overwrapping film F1 used to make the overwrap 25;
a second station 3 for feeding capsules 2 to be placed on conveyor members, and more specifically, carrier blocks 4 (shown in detail in Figures 5-7), featuring seats 5 for receiving the capsules 2 positioned with the major base 2b facing upward and moved stepwise along the feed line L;
a third station 6 for filling the advancing capsules 2 with charges of the infusion product through the major base 2b;
a fourth station 7 for sealing the major base 2b of each capsule 2 with a respective sealing portion A of sealing film F;
a fifth station 26 for picking and placing the capsules 2 in
a sixth coupling and sealing station 27 for coupling the overwrapping film F1 and the respective capsules 2 and for sealing individual lengths of overwrapping film F1 around a respective capsule 2;
a seventh station 28 for picking up the packs C made and feeding the packs into
an eighth station 29 of known type for stacking, followed by packaging into boxes containing a plurality of the packs C.

The movement of the capsules 2 and of the elements forming part of the above mentioned stations are controlled and synchronized by a main control unit 30 of the machine 1 (illustrated as a block in Figure 1).

Looking more closely at the technical details, the first and the second roll 23 and 24 are located upstream of the feed line L and are provided with respective feed units 23a and 24a to allow the respective webs of film F and F1 to follow a predetermined path and reach the relevant zones or stations: the first sealing film F up to the vicinity of the fourth station 7 for sealing the major base 2b of the capsule 2 after passing through substations where the film F is processed (as described in more detail further on in this specification); the second overwrapping film F1, on the other hand, up to the vicinity of the above mentioned sixth coupling and sealing station 27 (also described in more detail further on in this specification).

The second station 3 for feeding empty capsules 2 to be placed inside the seats 5 in the carrier blocks 4 (shown in detail in Figures 5-7) comprises a magazine for the empty capsules 2, means 9 for releasing and retaining the capsules 2 from the magazine and means 10 for holding and stabilizing the movement of the released capsule 2.

The magazine comprises at least one containment element 8 for containing the capsules 2 stacked one inside the other, and has an open bottom 8a located above the carrier blocks 4.

The containment element 8, for example in the form of a hollow cylinder, extends at least partly along a vertical axis Z coinciding, at least during a step of feeding the capsule 2, with a downfeed axis Z' which is central with respect to the seats 5 in each carrier block 4.

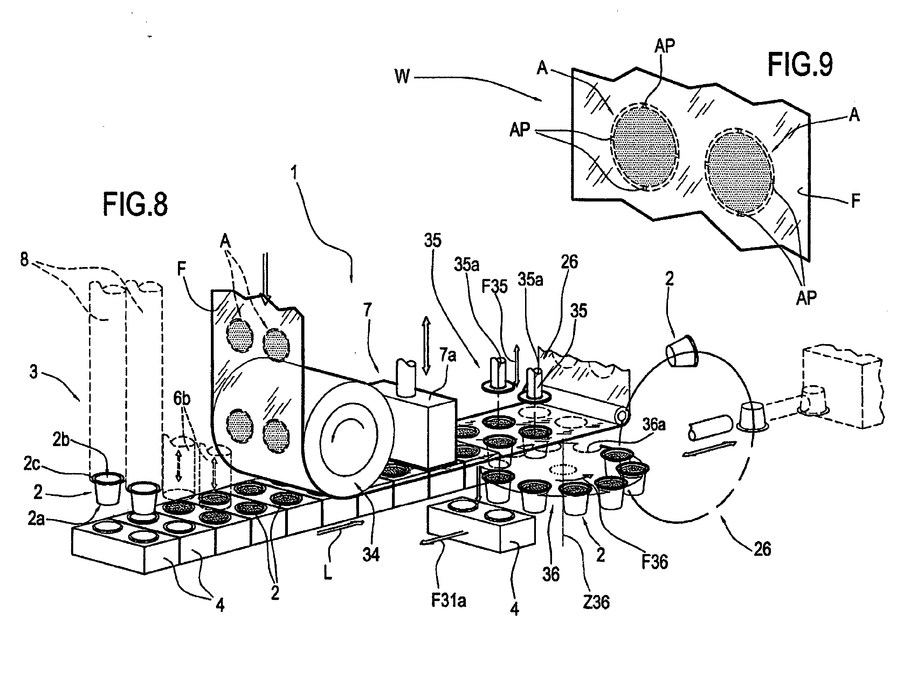

Purely by way of an example, the machine 1 comprises a pair of hollow cylindrical containment elements 8 extending side by side (see also Figure 8), with a vertical axis Z, and mounted at a certain height above the zone where the carrier blocks 4 pass, the latter being each in turn provided with a pair of seats 5 placed side by side.

Each cylinder 8 houses the empty capsules 2 to be fed to the carrier blocks 4.

The means 9 for releasing and retaining the capsules 2 are located at the containment element 8 and operate on the capsules 2 in such a way as to allow one capsule 2 to be released individually in synchronized manner towards the carrier block 4 along the downfeed axis Z' and to retain the next capsule 2.

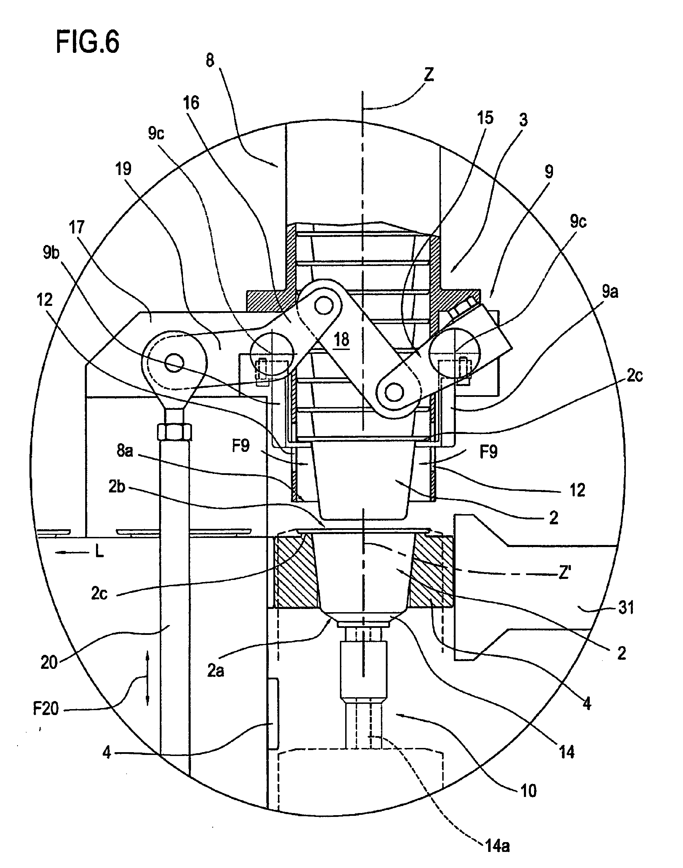

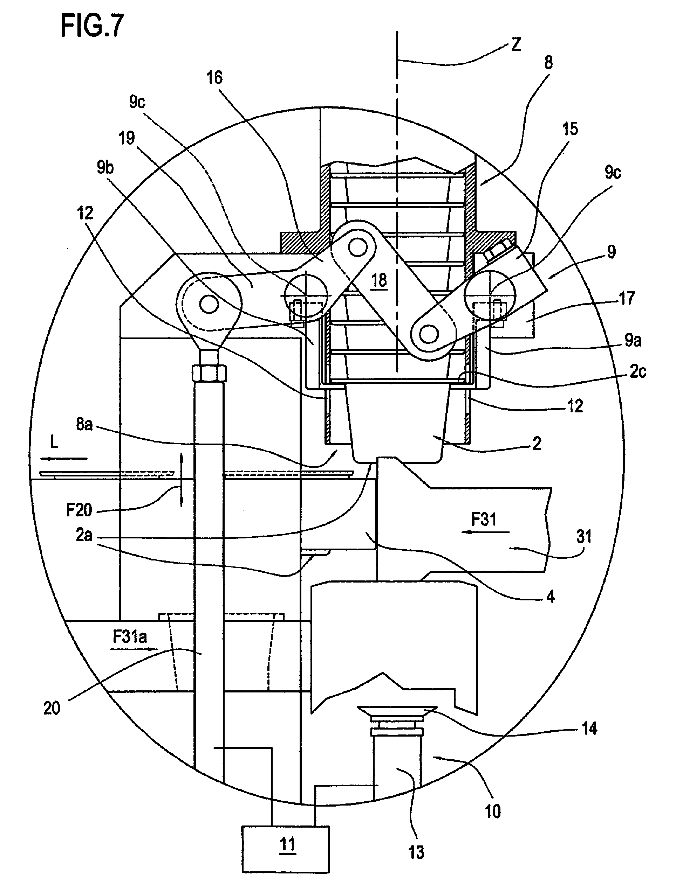

More specifically (again see Figures 5 to 7), the releasing and retaining means 9 comprise at least one pair of L-shaped levers 9a and 9b opposite each other and located on opposite sides of each containment element 8. Each pair of levers 9a and 9b acts in a substantially radial direction relative to the containment element 8. Each pair of levers 9a and 9b is driven by drive means 11 designed to allow the pair of levers 9a, 9b to move from a first position, away from the containment element 8, in order to release the capsule 2 (see Figure 5) to a second close-up position, near the containment element 8, in order to retain the next capsule 2 (see Figures 6 and 7).

To allow the capsules 2 to be retained, a horizontal stretch of each lever 9a and 9b, in the close-up position, is inserted into a respective through slot 12 in each containment element 8 and is positioned under a respective stretch of the annular collar 2c of the capsule 2 positioned in the vicinity of the open bottom of the containment element 8. The levers 9a, 9b are linked, at 9c, to respective arms 15, 16 linked to a mounting structure 17.

The two arms 15, 16 are in turn connected to each other by a third, middle arm 18 forming a drive rod, opposed to and synchronized with the levers 9a, 9b for moving them towards and away from each other (see arrows F9).

An extension 19 of the arm 16 is pivoted at one end to a transmission lever 20 movable vertically in both directions (see arrow F20) and forming part of a connecting rod and crank assembly connected to the main drive means 11 of the machine 1 equipped with customary cam means for driving the transmission lever 20 (illustrated as a block since they are of known type).

As already stated, the numeral 10 denotes the means for holding and stabilizing the downfeed movement of the released capsule 2. The holding and stabilizing means 10 are located under the containment elements 8, move in synchrony with the releasing and retaining means 9 and operate on the minor base 2a of the capsule 2 and along the vertical downfeed axis Z'. More specifically, the means 10 for holding and stabilizing the downfeed movement of the capsule 2 comprise a movable rod 13 and are positioned and movable in both directions along the downfeed axis Z' and pass through the seat 5 in the carrier block 4 in the feed position under the containment element 8.

The rod 13 is equipped at a free upper end of it with a contact suction cup 14 for contacting, when in a raised position, the minor base 2a of the capsule 2: that way, it is possible to obtain secure contact between the suction cup 14 and the minor base 2a (Figure 5), and to move the capsule 2 away from the containment element 8 and towards the respective seat 5 (Figure 6). The rod 13 is also linked at the bottom to a guide arm 21 which is reciprocatingly movable in both directions and which is axially keyed to the main drive means 11 (see Figure 1).

Each suction cup 14 may be provided with a conduit 14a for generating a negative pressure allowing an improved hold on the minor base 2a of the capsule 2. As already mentioned, therefore, the holding and stabilizing means 10 and the releasing and retaining means 9 are both driven by the main drive means 11 so as to cyclically synchronize their movements.

Thanks to this combination of elements, it is possible to obtain continuous and precise feed of the capsules 2 into the seats 5, since the levers 9a, 9b allow a single capsule 2 to be released in synchrony towards the respective seat 5 of the carrier block 4, positioned coaxially along the downfeed axis Z' and under the containment element 8. During the movement apart of the two levers 9a, 9b to release the last capsule 2, the rod 13 is positioned under the capsule 2 itself in order to allow the capsule 2 to move down correctly into the respective seat 5 in the carrier block 4 which is in the feed position at that moment.

The carrier blocks 4 are positioned in succession on two levels and follow an endless path: the first level, that is, the operating one, comprises a succession along the feed line L (as shown also in Figure 8) and the blocks are made to advance stepwise thanks to a pushing element 31 located at the upstream end of the feed station 3 (see arrow F31 in Figure 7); the second level, that is, the non-operating return one, extends under the first level and parallel with the latter and moves in the opposite direction (see arrow F31a in Figure 7).

In other terms, therefore, once the capsules 2 have been placed in the seats 5, the pushing element 31 pushes the carrier block 4 in such a way as to make it advance towards the next stations of the machine 1. The retraction of the pushing element 31 allows the next carrier block 4, located at the second level, to be lifted by suitable lift means (not illustrated). Similarly, at the opposite end, as described below, the carrier block 4 that has been freed of the full, sealed capsules moves down to the second level.

The stepwise feeding motion of the carrier blocks 4 takes the carrier blocks 4 in succession:
into the third station 6 for filling the capsules 2 with charges of the product, comprising a hopper 6a and fillers 6b;
to a unit 6c for pressing the product charges into the capsules 2; and
to a device 6d for detecting the presence of the product in the capsules 2
(for example, a capacitive or optical detector).

At this point, the capsules 2, which have been filled and are still inside the carrier blocks 4, are carried to the zone for positioning the sealing film F which is fed vertically from above by the feed elements 23a and, as it moves downwards, meets two film preparing units:
a first, micro-perforating unit 32; and
a second unit 33 for pre-cutting a sealing portion A.

In practice, the first, micro-perforating unit 32 comprises a perforating assembly (mechanical or laser type) which creates a circular zone of microperforations designed, in use, to percolate the water and product mix. The micro-perforating unit 32 may be omitted, depending on the type of capsule 2 to be made.

The second, pre-cutting unit 33 may comprise a knife 33a and a counter-knife 33b shaped in such a way as to form a pre-cut sealing portion A, which is circular in the example illustrated, with at least one, but preferably at least three radial joining protrusions AP, spaced at equal angular intervals, for joining the sealing portions A to the rest of the sealing film F (in Figure 9, there are four of these protrusions by way of an example).

As shown in Figure 4, the sealing portion A created has a diameter DA that is smaller than the diameter D2 of the collar 2c of the capsule 2: this feature will make it possible, once the sealing portion A is attached to the capsule 2, to avoid the problem of excess edges and trimming of the sealing portion A along the collar 2c of the capsule 2.

Returning to the machine 1, the sealing film F with the pre-cut sealing portions A on it is brought into contact with the major base 2b by a feed roller 34.

In the next step, the capsule 2 with sealing film F superposed over it comes under the above mentioned fourth sealing station 7, which is equipped with a suitable sealer 7a adapted to join, for example by heat sealing or ultrasound sealing, the sealing portion A to the collar 2c at a joining zone, labelled S in Figure 4, for example annular in shape.

Next, the carrier blocks 4 are moved away from the sealed capsules 2, that is to say, the carrier blocks 4 are made to move down to the second level, while the continuous web of sealing film F, with the capsules 2 joined by the seal S, is made to advance further stepwise (thanks also to bilateral translational grippers operating on the sealing film F but not illustrated in detail here since they are of known type) until it reaches the fifth station 26 for picking the capsules 2 and placing them in the sixth station 27 for coupling and sealing with the overwrapping film F1. It should be noted that the capsules 2 are moved without being manipulated directly but by moving the sealing film F to which they are attached by the radial protrusions AP.

The fifth, pick and place station 26 comprises an ejector device 35, a carousel 36 and a single pick unit 38 for picking up the capsule 2.

The ejector device 35 is composed of a pair of pressers 35a and counter-pressers 35b movable in synchronized fashion and vertically (see arrows F35, Figure 8), and adapted to detach the capsule 2 with the sealing portion A from the remaining waste portion of the sealing film F, in other words, to tear the radial joining protrusions AP.

The controlled release, thanks to the combined movement of the pressers 35a and counter-pressers 35b, causes the capsules 2 to drop, in pairs, into circular seats 36a in the carousel 36.

The waste portion of the sealing film F is then extracted by a suction extraction unit 37 soon after being detached from the capsules 2 (see Figure 1).

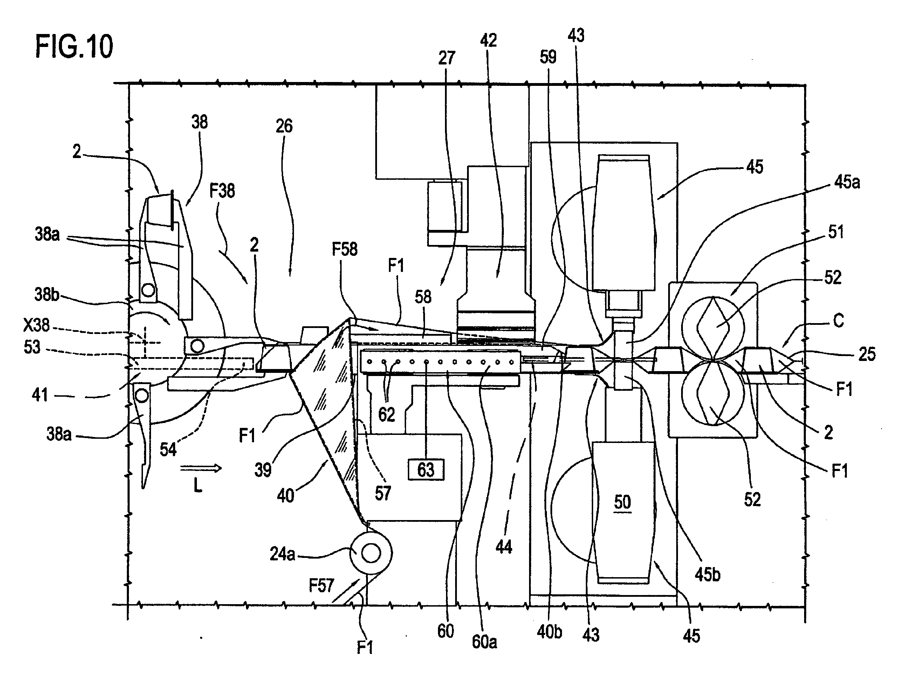

The carousel 36, located at a height below the first level at which the carrier blocks 4 move, causes the capsules 2 to rotate, still stepwise, through approximately 180° about a vertical axis Z36 (see arrow F36 in Figure 8) in such a way as to position them at a zone operated on by the single pick unit 38 for picking up the capsule 2 (see Figure 10).

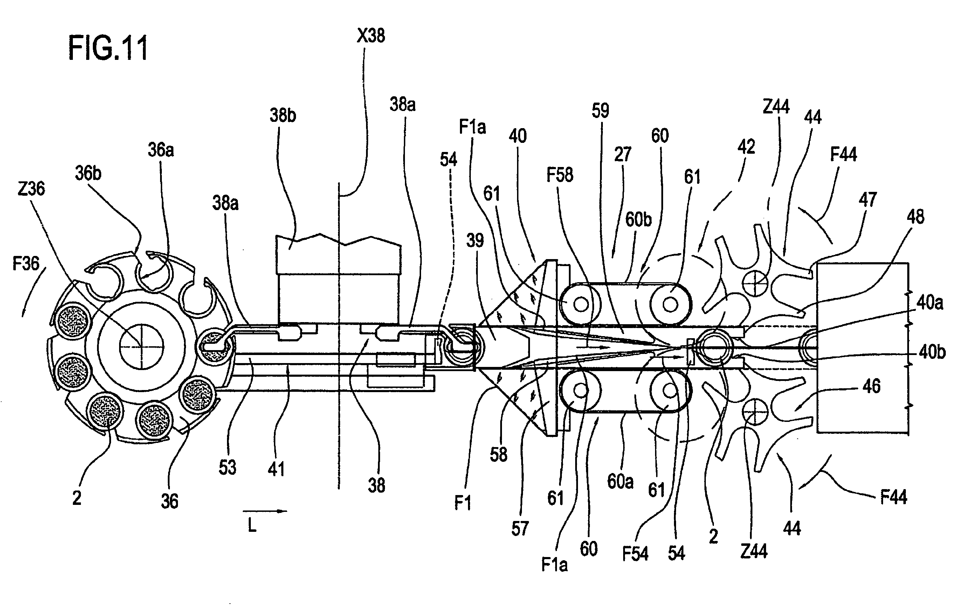

With reference to Figures 10 and 11, the single pick unit 38 picks up and rotates the capsule 2 through 180° about a horizontal axis X38 and rests the capsule 2 on its major base 2b, more stable than if rested on the minor base 2a, on a sliding feed table 39 of the coupling and sealing station 27 (following a circular path F38). More specifically, the single pick unit 38 is located immediately upstream of the sixth, coupling and sealing station 27.

The single pick unit 38 is equipped with a plurality of grippers 38a protruding radially from a revolving drum 38b.

The ends of each gripper 38a are shaped in such a way as not to interfere with other parts of the machine 1 during the picking and rotational lift movement of the capsules 2 from the carousel 36.

The coupling and sealing station 27 comprises (see Figures 10 to 12):
a frame 40 for continuously forming the second, overwrapping film F1 into the shape of a tube and having a slide table 39 on which the capsule 2 can be positioned on one of its ends (in the embodiment illustrated, the second end 2b);
a pusher device 41 for pushing the single capsules 2 along the slide table 39 and designed to position each capsule 2 in the vicinity of a pick-up point close to an outermost or outfeed end of the frame 40 and then, relative to the feed line L, at a first longitudinal sealer 42 which operates on the second, overwrapping film F1 to make a continuous closed tube of overwrapping film;
means 43 for guiding and retaining the capsule 2 feeding out of the frame 40, operating on the capsule 2 from the outside of the continuous closed tube of overwrapping film, movable in synchronized fashion with a second, transversal sealer 45 designed to make a transversal seal on the tube of overwrapping film in order to seal the ends of each single pack C and in such a way as to allow coordinated feeding of the capsule 2 and of the tube of overwrapping film along the feed line L so as to keep the capsule 2 and the tube of overwrapping film in a stable position relative to each other while the transversal seal is being made. The transversal seal is therefore made, relative to the feed line L, downstream of the capsule 2 which is guided and retained by the guiding and retaining means 43.

More in detail, the frame 40 comprises (see in particular Figures 1 and from 10 to 12) a pair of front walls 57 or ties and a tubular structure 59 forming a core for the overwrapping film F1.

The overwrapping film F1 is fed from the second roll 24 from under the zone where the two ties 57 are located and slides over the two ties 57 (see arrow F57, Figure 10).

The overwrapping film F1 slides until it reaches an infeed and folding zone along the feed line L where, thanks to a folding element 58 extending in parallel with the feed line L, it is wrapped on itself to form the tube of overwrapping film (see arrow F58, Figures 10 and 11).

The tubular structure 59, which is quadrangular in section, is provided with the feed table 39 (forming the bottom side of the structure), and with movement means 60 for moving the overwrapping film F1 and operating on both sides of the tubular structure 59.

In addition to the above, the tubular structure 59 has at least one longitudinal upper slit in the shape of a V lying on one side, which forms the folding element 58 and within which two free edges F1a of the overwrapping film F1 are slidable up to the vicinity of the first, longitudinal sealer 42 which seals them together. The longitudinal sealer 42 comprises a pair of heated rollers in tangential contact and counter-rotating in order to allow the overwrapping film F1 to form the overwrapping film tube.

The movement means 60 may comprise rubber-coated tracks 60a, 60b located on opposite sides of the tubular structure 59. Each of the tracks 60a, 60b is closed in a loop around a pair of motor-driven pulleys 61 and features a plurality of holes 62 on the surface of it operated on by a unit 63 for generating a negative pressure (illustrated as a block in Figure 10) so as to allow the overwrapping film F1 interposed between the tubular structure 59 and the tracks 60a, 60b to adhere securely and be fed forward.

The pusher device 41 comprises a horizontal rod 53 having a pushing head 54 shaped to push the capsule 2 resting on the table 39. The rod 53 with the head 54 allows the capsule 2 to slide along the sliding feed table 39 from a front end to a rear end of the sliding feed table 39 itself into a pickup point (see arrow F54, Figure 11). The rod 53 is driven by a link mechanism 55 (see Figure 1 in particular) constrained to cam means 56 connected to the main drive means 11 in such a way as to allow the rod 53 to move reciprocatingly in parallel with the table 39 (see arrows F53, Figure 1). As shown in Figure 11, the grippers 38a of the single pick unit 38 are suitably shaped to by-pass the head 54 of the pusher 53. Consequently, the seat 36a of the carousel 36 has a radial slit 36b shaped to match it and open on the outside of each seat 36a.

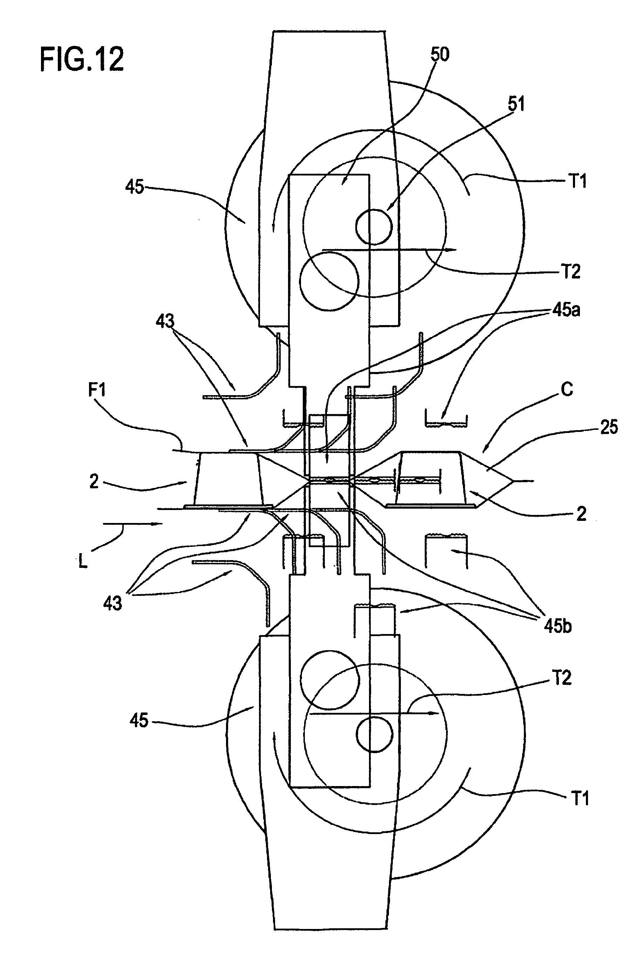

The guiding and retaining means 43 comprise a pair of tabs 43 for retaining and guiding the capsules 2 up and down. The tabs 43, see Figure 12 in particular, are flexible and are associated with a respective part of the second, transversal sealer 45, upstream of them with reference to the feed line L. The tabs 43 are therefore movable with the second, transversal sealer 45 for intercepting the capsule 2 inside the respective tube of overwrapping film at the rear end of the sliding feed table 39 when outside the range of the rod 53. This occurs when the second transversal sealer 45 moves towards the tube of overwrapping film. The tabs 43 thus cause the capsule 2 to advance along the feed line L together with the portion of overwrapping film tube wrapped around the capsule 2 and their movements are synchronized with the movement of the second transversal sealer 45.

The machine 1 may also comprise a pair of discs 44 which are located on opposite sides of the tube of overwrapping film being fed forward and which rotate about respective vertical axes Z44 (see arrows F44, Figure 11). Each disc 44 has a series of radial seats 46 formed by pairs of protruding arms 47 and 48 and designed to be positioned on the outside of the overwrapping film tube on both sides of the capsule 2 in the vicinity of the rear end of the sliding feed table 39. When the capsule 2 is fed forward (see Figure 2), the ends of each pair of arms 47 and 48 create internal side folds 49 on the overwrapping film tube.

With reference to Figures 10 and 11, it may be noted that a rear end of the frame 40 is provided with slots 40a, 40b on each of its sides to allow correct passage, at least partial, of the pairs of arms 47, 48 of the discs 44.

As clearly shown in Figure 12, the second, transversal sealer 45 comprises a pair of opposed sealing heads 45a, 45b. The sealing heads 45a and 45b are associated with respective supports 50 in turn driven by cam means 51 adapted to allow each of the sealing heads 45a and 45b to follow a path comprising at least a first non-operating stretch which is, advantageously, substantially circular (see arrow T1), and a second operating stretch which is, advantageously, rectilinear (see arrow T2) when contact is made with the overwrapping film tube in order to seal it transversally. In the operating stretch, the sealing heads 45a and 45b move at a speed equal to the feed speed of the overwrapping film tube.

A path similar to that of the sealing heads 45a and 45b is followed by the tabs 43 associated with the sealing heads 45a and 45b.

Lastly, downstream of the transversal sealer 45, with reference to the feed line L, there is a cutting unit 51, formed by a pair of rotary knives 52, synchronized with the transversal sealer 45, for separating individual packs C of capsules 2 with overwrapping 25.

The knives 52 are suitably shaped to separate individual packs C and to make in each of them an easy tear notch 64 to facilitate opening.

The individual packs C are then fed into an eighth stacking station 29 from where they are carried in predetermined groups to a multiple packaging station (of known type and therefore not illustrated).

To sum up, therefore, a machine according to the invention for packaging capsules 2 in an overwrap 25 performs the following steps:
feeding the empty capsules 2 in succession along the feed line L by means of the containment elements 8 on the carrier blocks 4 (see Figures 1 to 8);
filling the capsules 2 with respective charges of infusion product through the second end 2b of the capsules 2 using the fillers 6b, and then pressing the charges into the capsules 2 using the pressing unit 6c (see Figures 1 and 8);
pre-cutting the web of sealing film F (using the pre-cutting unit 33) for making a plurality of circular sealing portions A with a diameter DA smaller than the diameter D2 of the annular collar 2c of the capsule 2; the sealing portions A remain attached to the rest of the sealing film F by at least three radial protrusions AP (see Figures 1, 8 and 9);
sealing each capsule 2 with the sealing portions A using the sealers 7a acting at least on the annular zone S of the collar 2c of the second end 2b of the capsule 2;
separating each capsule 2 sealed by the respective sealing portion A from the remaining waste portion of the film F using the ejector device 35 (see Figures 1 and 8), and at the same time
placing the capsules 2 in the carousel 36 in order to rotate them about the vertical axis Z36 up to the point of;
picking and rotation of the capsule 2 about the horizontal axis X38 and placing it on the sliding feed table 39 (see Figures 8, 10 and 11);
moving the capsule 2 in a straight line along the table 39 (using the pusher device 41) in order to place the capsule 2 in the vicinity of the picking point, that is to say, at the outfeed end of the frame 40 (see Figures 10, 11 and 12);
picking and guiding the movement of the capsule 2 together with a length of the overwrapping film F1 being fed along the feed line L in the tubular configuration formed on the frame 40 and sealed along the first longitudinal seal made by the first, longitudinal sealer 42 (see Figures 10, 11 and 12); this guided movement continues at least until
making a second transversal seal on the overwrapping film tube downstream of the capsule 2 with reference to the feed line L (see in particular Figure 12).

After the second, transversal seal has been made, a third, transversal seal is made upstream of the capsule 2, with reference to the feed line L, in such a way as to form an individual pack C (see Figures 1 and 12). The third, transversal seal made on the overwrapping film tube of one capsule 2 simultaneously forms the second, transversal seal on the overwrapping film tube of the next capsule 2 along the feed line L.

Once the third transversal seal has been made, the individual pack C is cut off from the rest of the overwrapping film tube (see Figures 1 and 10).

As may be observed in Figure 9, the pre-cutting step creates, in the embodiment illustrated and purely by way of an example, four protrusions AP joining the sealing portion A to the rest of the sealing film F and spaced at equal angular intervals from each other.

As already mentioned in the description of the machine 1, the separating step is accomplished by a vertical pushing action applied to the annular collar 2c of the sealed capsule 2 in such a way as to separate and, more specifically, tear the protrusions AP from the remaining waste portion of the sealing film F.

The step of rotating the capsule 2 turns the capsule 2 through an angle of approximately 180° in such a way as to rest it on the table 39 on its second end 2b, more stable than if the capsule 2 is rested on the second end 2a.

Lastly, it should be noted that the steps from the step of feeding the empty capsules 2 to the step of separating the sealed capsules 2 from the waste portion of the sealing film F, including rotation on the carousel 36, are accomplished by intermittent, synchronized stepwise motion of the machine, while the steps from the step of picking and rotating the capsule 2 to the step of cutting the individual pack C are performed with the machine operating with synchronized, continuous motion.

It should be noted that in the machine 1 just described, the carousel 36 receives two capsules 2 at a time from the ejector device 35, whereas the capsules 2 are picked up from the carousel 36 one at a time by the grippers 38a of the pick and place station 26. In other words, the carrier blocks 4 advance by one step for every two steps of the carousel 36, whereas the pick and place station 26 rotates by one step for every step of the carousel 36.

A machine made in this way makes it possible to achieve high productivity per unit time at a reduced cost and to obtain high quality finished capsules and packs.

The invention described above is susceptible of industrial application and may be modified and adapted in several ways without thereby departing from the scope of the inventive concept as defined by the claims. Moreover, all the details of the invention may be substituted by technically equivalent elements. For example, instead of the single pick unit 38, a different system might be used to place the capsules 2 with the first closed end resting on the sliding feed table.

This invention, although described with reference to capsules having a substantially frusto-conical shape, might also be applied to capsules having a different shape. In such a case, the sealing film F is pre-cut into the exact shape and size for sealing the capsule without protruding from the edge of the capsule.

## Claims

1. A machine for packing infusion products into capsules (2), each capsule (2) comprising a hard body forming a zone for containing a product charge and delimited by a first, closed hard end (2a) and a second open end (2b) with an outer rim (2c), the machine (1) featuring a plurality of stations along a capsule (2) feed line (L), including at least:
a station (6) for filling the capsules (2) with charges of product through the second, open end (2b);
a station (7) for sealing the second, open end (2b) of each capsule (2) with sealing film (F);
a coupling and sealing station (27) for coupling the overwrapping film (F1) and the capsules (2) after the latter have been sealed and for sealing the overwrapping film (F1) around a respective capsule (2) to form an individual pack (C); the machine (1) being **characterized in that** the coupling and sealing station (27) comprises:
a frame (40) for forming the overwrapping film into the shape of a continuous tube and having a sliding feed table (39) on which the capsule (2) can be positioned on one of its ends (2a, 2b);
a pusher device (41) for pushing each capsule (2) along the sliding feed table (39) and designed to position each capsule (2) at a picking point close to an outfeed end of the frame (40) and then at a first longitudinal sealer (42) designed to make first longitudinal seal on the overwrapping film (F1);
- means (43, 44) for guiding and retaining the capsule (2) feeding out of the frame (40), operating on the capsule (2) from the outside of the continuous tube of overwrapping film, movable in synchronized fashion with a second, transversal sealer (45) designed to make a second, transversal seal on the tube of overwrapping film in order to seal the ends of each single pack (C) and in such a way as to allow coordinated feeding of the capsule (2) and of the tube of overwrapping film along the feed line (L) so as to keep the capsule (2) and the continuous tube of overwrapping film in a stable position relative to each other at least while the second, transversal seal is being made.

2. The machine according to claim 1, wherein the guiding and retaining means comprise a pair of flexible tabs (43) associated with, and located upstream of, respective parts of the second, transversal sealer (45), and movable with them in such a way as to intercept the capsule (2) positioned at the picking point when the second, transversal sealer (45) moves towards the tube of overwrapping film, and to feed the same capsule (2) and the overwrapping film tube in synchrony with the movement of the second, transversal sealer (45).

3. The machine according to claim 1, comprising a pair of shaped discs (44) located on opposite sides of the tube of overwrapping film being fed forward and rotating about respective vertical axes (Z44); each disc (44) having a series of radial seats (46) formed by pairs of protruding arms (47, 48) and designed to be positioned, on both sides of the capsule (2), at the picking point and in synchrony with the second, transversal sealer (45), in order to allow capsule (2) feed to be synchronized with the second, transversal sealer (45); the ends of each pair of arms (47, 48) creating internal side folds (49) on the overwrapping film tube.

4. The machine according to claim 3, wherein the frame (40) is provided with slots (40a, 40b) on each of its sides to allow the passage of the pairs of arms (47, 48) of the discs (44).

5. The machine according to any of the foregoing claims, wherein the second, transversal sealer (45) comprises a pair of opposed sealing heads (45a, 45b) associated with respective supports (50) driven by cam means (51) adapted to allow each of the sealing heads (45a, 45b) to follow a path comprising a first non-operating stretch (T1) and a second operating stretch which is, substantially, rectilinear (T2) when the sealing heads (45a, 45b) come into contact with the overwrapping film tube in order to seal it transversally.

6. The machine according to any of the foregoing claims, wherein, downstream of the second, transversal sealer (45) with reference to the feed line (L), there is a cutting unit (51), comprising a rotary knife (52), synchronized with the transversal sealer (45), for separating individual packs (C) of capsules (2) within respective portions of overwrapping film tube.

7. The machine according to any of the foregoing claims, wherein the pusher device (41) comprises a horizontal rod (53) having a pushing head (54) shaped to push the capsule (2) from a front end of the sliding feed table (39) to a rear end of the same sliding feed table (39); the rod (53) being reciprocatingly movable in parallel with the sliding feed table (39).

8. The machine according to any of the foregoing claims, wherein the frame (40) comprises:
- a pair of shaped front walls (57) or ties on which the overwrapping film (F1) slides until it reaches an overwrapping film (F1) infeed and folding zone along the feed line (L) where, thanks to a folding element (58) extending in parallel with the feed line (L), it is wrapped on itself to form the overwrapping film tube;
- a tubular structure (59), quadrangular in section, provided with the feed table (39) and with movement means (60) for moving the overwrapping film (F1) and operating bilaterally; the tubular structure (59) having at least one longitudinal upper slit (58) in the shape of a V lying on one side, which forms the folding element (58) and within which two free edges of the overwrapping film (F1) are slidable up to the vicinity of the first, longitudinal sealer (42).

9. The machine according to claim 8, wherein the movement means (60) comprise rubber-coated tracks (60a, 60b) located on opposite sides of the tubular structure (59); each of the tracks (60a, 60b) being closed in a loop around a pair of motor-driven pulleys (61) and featuring a plurality of holes (62) on the surface of it operated on by a unit (63) for generating a negative pressure so as to allow the overwrapping film (F1) interposed between the tubular structure (59) and the tracks (60a, 60b) to adhere securely and be fed forward.

10. The machine according to any of the foregoing claims, wherein, upstream of the front end of the sliding feed table (39) with reference to the feed line (L), there is a single pick unit (38) for positioning the individual capsules (2) on the front end; the single pick unit (38) being equipped with a plurality of grippers (38a) for gripping and releasing the capsules (2) in synchrony.

## Patentansprüche

1. Maschine zur Verpackung von aufbrühbaren Produkten in Kapseln (2), wobei jede Kapsel (2) einen harten Körper umfasst, der einen Bereich zur Aufnahme einer Produktfüllung bildet und von einem ersten, geschlossenen harten Ende (2a) und einem zweiten offenen Ende (2b) mit einer Außenkante (2c) begrenzt wird, wobei die Maschine (1) eine Vielzahl von Stationen entlang einer Zuführlinie (L) von Kapseln (2) beinhaltet, die mindestens Folgendes umfasst:
eine Station (6) zum Befüllen der Kapseln (2) mit Produktfüllungen durch das zweite, offene Ende (2b);
eine Station (7) zum Versiegeln des zweiten, offenen Endes (2b) einer jeden Kapsel (2) mit einer Versiegelungsfolie (F);
eine Verbindungs- und Versiegelungsstation (27) zum Verbinden der Umhüllungsfolie (F1) und der Kapseln (2), nachdem Letztere versiegelt wurden, und zum Versiegeln der Umhüllungsfolie (F1) um eine jeweilige Kapsel (2) herum, um eine Einzelpackung (C) zu bilden; wobei die Maschine (1) **dadurch gekennzeichnet ist, dass** die Verbindungs- und Versiegelungsstation (27) Folgendes umfasst:
ein Gestell (40) zum Bilden der Umhüllungsfolie in die Gestalt eines endlosen Schlauchs und aufweisend einen Schiebezuführtisch (39), auf dem die Kapsel (2) auf einem ihrer Enden (2a, 2b) positioniert werden kann;
eine Vorrückvorrichtung (41) zum Vorrücken einer jeden Kapsel (2) entlang des Schiebezuführtisches (39), die dazu konzipiert wurde, jede Kapsel (2) an einem Aufnahmepunkt in der Nähe eines Austrittendes des Gestells (40) und dann an einem ersten longitudinalen Versiegeler (42) zu positionieren, der dazu konzipiert ist, eine erste longitudinale Versiegelung auf der Umhüllungsfolie (F1) herzustellen;
Mittel (43, 44) zum Führen und Festhalten der aus dem Gestell (40) herausgeführten Kapsel (2), die auf die Kapsel (2) von außerhalb des endlosen Schlauchs Umhüllungsfolie einwirken, die auf synchronisierte Art und Weise mit einem zweiten, transversalen Versiegeler (45) beweglich sind, der dazu konzipiert ist, eine zweite, transversale Versiegelung auf dem Schlauch Umhüllungsfolie vorzunehmen, um die Enden einer jeden Einzelpackung (C) zu versiegeln, und so, dass ein koordiniertes Zuführen der Kapsel (2) und des Schlauchs Umhüllungsfolie entlang der Zuführlinie (L) gestattet wird, sodass die Kapsel (2) und der endlose Schlauch Umhüllungsfolie relativ zueinander in einer stabilen Position gehalten werden, zumindest während die zweite, transversale Versiegelung hergestellt wird.

2. Maschine nach Anspruch 1, wobei die Führ- und Festhaltemittel ein Paar flexibler Laschen (43) aufweisen, die an entsprechende Teile des zweiten, transversalen Versiegelers (45) anschließen und diesem vorgelagert liegen, und mit diesen so beweglich sind, dass die Kapsel (2), die am Aufnahmepunkt positioniert ist, abgefangen wird, wenn sich der zweite, transversale Versiegeler (45) in Richtung des Schlauchs Umhüllungsfolie bewegt, und diese Kapsel (2) und der Umhüllungsfolienschlauch synchron mit der Bewegung des zweiten, transversalen Versiegelers (45) bewegen.

3. Maschine nach Anspruch 1, umfassend ein Paar geformter Scheiben (44), die an entgegengesetzten Seiten des Umhüllungsfolienschlauchs liegen, der nach vorn geführt wird, und um entsprechende Vertikalachsen (Z44) rotieren; wobei jede Scheibe (44) eine Reihe radialer Aufnahmen (46) aufweist, die von Paaren auskragender Arme (47, 48) gebildet werden und dazu konzipiert sind, an beiden Seiten der Kapsel (2), am Aufnahmepunkt und synchron zum ersten, transversalen Versiegeler (45), positioniert zu werden, um eine Synchronisierung der Zufuhr der Kapsel (2) mit dem zweiten, transversalen Versiegeler (45) zu gestatten; wobei die Enden eines jeden Armpaares (47, 48) innere Seiteneinfaltungen (49) am Umhüllungsfolienschlauch bilden.

4. Maschine nach Anspruch 3, wobei das Gestell (40) an jeder seiner Seiten mit Schlitzen (40a, 40b) ausgestattet ist, um den Durchlauf der Armpaare (47, 48) der Scheiben (44) zu gestatten.

5. Maschine nach einem der vorangehenden Ansprüche, wobei der zweite, transversale Versiegeler (45) ein Paar entgegengesetzter Versiegelungsköpfe (45a, 45b) umfasst, die an entsprechende Träger (50) anschließen, die von Nockenmitteln (51) angetrieben werden, die dazu geeignet sind, zu gestatten, dass jeder der Versiegelungsköpfe (45a, 45b) einer Bahn folgt, umfassend einen ersten nicht betriebenen Abschnitt (T1) und einen zweiten betriebenen Abschnitt, der im Wesentlichen geradlinig (T2) ist, wenn die Versiegelungsköpfe (45a, 45b) in Kontakt mit dem Umhüllungsfolienschlauch kommen, um ihn transversal zu versiegeln.

6. Maschine nach einem der vorangehenden Ansprüche, wobei in Bezug auf die Zuführlinie (L) dem zweiten, transversalen Versiegeler (45) nachgelagert eine Schneideeinheit (51) vorhanden ist, umfassend ein rotierendes Messer (52), das mit dem transversalen Versiegeler (45) synchronisiert ist, um Einzelpackungen (C) von Kapseln (2) innerhalb von entsprechenden Abschnitten des Umhüllungsfolienschlauchs zu trennen.

7. Maschine nach einem der vorangehenden Ansprüche, wobei die Vorrückvorrichtung (41) einen horizontalen Stab (53) umfasst, aufweisend einen Vorrückkopf (54), der zum Vorrücken der Kapsel (2) von einem vorderen Ende des Schiebezuführtischs (39) zu einem hinteren Ende dieses Schiebezuführtischs (39) geformt ist; wobei der Stab (53) parallel zum Schiebezuführtisch (39) reziprok beweglich ist.

8. Maschine nach einem der vorangehenden Ansprüche, wobei das Gestell (40) Folgendes umfasst:
- ein Paar geformter Stirnwände (57) oder Stege, auf denen die Umhüllungsfolie (F1) vorgeschoben wird, bis sie einen Bereich zum Einspeisen und Falten der Umhüllungsfolie (F1) entlang der Zuführlinie (L) erreicht, wo sie dank eines Faltelements (58), das sich parallel zur Zuführlinie (L) erstreckt, um sich selbst gehüllt wird, um den Umhüllungsfolienschlauch zu bilden;
- eine schlauchförmige Struktur (59), die im Schnitt viereckig ist, die mit dem Zuführtisch (39) und mit Bewegungsmitteln (60) zum Bewegen der Umhüllungsfolie (F1) ausgestattet ist und bilateral betrieben wird; wobei die schlauchförmige Struktur (59) mindestens einen longitudinalen oberen Schlitz (58) in Form eines auf einer Seite liegenden Vs aufweist, der das Faltelement (58) bildet und in dem zwei freie Ränder der Umhüllungsfolie (F1) nach oben in die Nähe des ersten, longitudinalen Versiegelers (42) verschiebbar sind.

9. Maschine nach Anspruch 8, wobei die Bewegungsmittel (60) gummibeschichtete Laufbahnen (60a, 60b) umfassen, die an entgegengesetzten Seiten der schlauchförmigen Struktur (59) liegen; wobei jede der Laufbahnen (60a, 60b) in einer Schleife um ein Paar motorenbetriebener Umlenkrollen (61) herum geschlossen ist, und mit einer Vielzahl von Löchern (62) auf ihrer Oberfläche versehen ist, die von einer Einheit (63) zur Erzeugung eines Unterdrucks betrieben wird, sodass gestattet wird, dass die zwischen der schlauchförmigen Struktur (59) und den Laufbahnen (60a, 60b) liegende Umhüllungsfolie (F1) sicher anhaftet und nach vorn geführt wird.

10. Maschine nach einem der vorangehenden Ansprüche, wobei in Bezug auf die Zuführlinie (L) dem vorderen Ende des Schiebezuführtisches (39) vorgelagert eine Einzelaufnahmeeinheit (38) zur Positionierung der einzelnen Kapseln (2) am vorderen Ende vorhanden ist; wobei die Einzelaufnahmeeinheit (38) mit einer Vielzahl von Greifern (38a) zum synchronen Greifen und Loslassen der Kapseln (2) ausgestattet ist.

## Revendications

1. Machine de conditionnement de produits à infuser dans des capsules (2), chaque capsule (2) comprenant un corps rigide formant une zone destinée à contenir une dose de produit et délimitée par une première extrémité rigide fermée (2a) et une seconde extrémité ouverte (2b) avec un bord extérieur (2c), la machine (1) comportant une pluralité de postes le long d'une ligne d'alimentation (L) de capsules (2), incluant au moins :
un poste (6) de remplissage de capsules (2) avec doses de produit à travers la seconde extrémité ouverte (2b) ;
un poste (7) destiné à sceller la seconde extrémité ouverte (2b) de chaque capsule (2) avec un film d'hermétisation (F) ;
un poste d'accouplement et de scellement (27) destiné à accoupler le film de surenveloppage (F1) et les capsules (2) après que ces dernières ont été scellées et destiné au scellement du film de surenveloppage (F1) autour d'une capsule respective (2) pour former un emballage individuel (C) ; la machine (1) étant **caractérisée en ce que** le poste d'accouplement et de scellement (27) comprend :
un cadre (40) destiné à former le film de surenveloppage de façon à représenter un tube continu et disposant d'une table d'alimentation coulissante (39) sur laquelle la capsule (2) peut être positionnée à l'une de ses extrémités (2a, 2b) ;
un dispositif poussoir (41) destiné à pousser chaque capsule (2) le long de la table d'alimentation coulissante (39) et conçu pour positionner chaque capsule (2) à un point de ramassage proche d'une extrémité de sortie du cadre (40) puis à une première scelleuse longitudinale (42) conçue pour réaliser une première jointure longitudinale sur le film de surenveloppage (F1) ;
des moyens (43, 44) destinés à guider et à retenir la capsule (2) sortant du cadre (40), agissant sur la capsule (2) de l'extérieur du tube continu de film de surenveloppage, mobiles de manière synchronisée avec une seconde scelleuse transversale (45) conçue pour réaliser une seconde jointure transversale sur le tube de film de surenveloppage afin de sceller les extrémités de chaque emballage individuel (C) et de sorte à permettre l'alimentation coordonnée de la capsule (2) et du tube de film de surenveloppage le long de la ligne d'alimentation (L) afin de maintenir la capsule (2) et le tube continu de film de surenveloppage dans une position stable réciproquement au moins pendant que la seconde jointure transversale est en train de se réaliser.

2. Machine selon la revendication 1, dans laquelle les moyens de guidage et de retenue comprennent une paire de languettes flexibles (43) associées aux parties respectives de la seconde scelleuse transversale (45) et situées en amont de ladite scelleuse (45), et mobiles avec elles de sorte à intercepter la capsule (2) positionnée au point de ramassage lorsque la seconde scelleuse transversale (45) se déplace vers le tube de film de surenveloppage, et pour alimenter la même capsule (2) et le tube de film de surenveloppage de façon synchrone avec le mouvement de la seconde scelleuse transversale (45).

3. Machine selon la revendication 1, comprenant une paire de disques façonnés (44) situés sur les côtés opposés du tube de film de surenveloppage étant alimentés vers l'avant et pivotant autour d'axes verticaux respectifs (Z44) ; chaque disque (44) ayant une série de sièges radiaux (46) formés par des paires de bras en saillie (47, 48) et conçus pour être positionnés, sur les deux côtés de la capsule (2), au point de ramassage et de façon synchrone avec la seconde scelleuse transversale (45), afin de permettre à l'acheminement de la capsule (2) d'être synchronisé avec la seconde scelleuse transversale (45) ; les extrémités de chaque paire de bras (47, 48) créant des plis latéraux internes (49) sur le tube de film de surenveloppage.

4. Machine selon la revendication 3, dans laquelle le cadre (40) est pourvu de fentes (40a, 40b) sur chacun de ses côtés pour permettre le passage des paires de bras (47, 48) des disques (44).

5. Machine selon l'une quelconque des revendications précédentes, dans laquelle la seconde scelleuse transversale (45) comprend une paire de têtes de scellement opposées (45a, 45b) associées à des supports respectifs (50) entraînées par des moyens à came (51) aptes à permettre à chaque tête de scellement (45a, 45b) de suivre une trajectoire comprenant une première portion non fonctionnelle (T1) et une seconde portion fonctionnelle (T2) étant substantiellement rectiligne lorsque les têtes de scellement (45a, 45b) sont en contact avec le tube de film de surenveloppage afin de le sceller transversalement.

6. Machine selon l'une quelconque des revendications précédentes, dans laquelle, en aval de la seconde scelleuse transversale (45) en référence à la ligne d'alimentation (L), se trouve une unité de découpe (51) comprenant un couteau rotatif (52), synchronisée avec la scelleuse transversale (45), pour séparer les emballages individuels (C) de capsules (2) à l'intérieur de portions correspondantes de tube de film de surenveloppage.

7. Machine selon l'une quelconque des revendications précédentes, dans laquelle le dispositif pousseur (41) comprend une tige (53) horizontale disposant d'une tête poussant (54) façonnée pour pousser la capsule (2) d'une extrémité antérieure de la table d'alimentation coulissante (39) à une extrémité postérieure de la même table d'alimentation coulissante (39) ; la tige (53) étant mobile selon un mouvement de va-et-vient parallèle à la table d'alimentation coulissante (39).

8. Machine selon l'une quelconque des revendications précédentes, dans laquelle le cadre (40) comprend .
- une paire de parois antérieures façonnées (57) ou traverses sur lesquelles le film de surenveloppage (F1) glisse jusqu'à ce qu'il atteigne une zone d'entrée et de pliage de film de surenveloppage (F1) le long de la ligne d'alimentation (L) où, grâce à un élément de pliage (58) se développant parallèlement à la ligne d'alimentation (L}, il est enveloppé sur lui-même pour former le tube de film de surenveloppage ;
- une structure tubulaire (59), à section quadrangulaire, pourvue de la table d'alimentation (39) et des moyens de déplacement (60) pour déplacer le film de surenveloppage (F1) et fonctionnant bilatéralement ; la structure tubulaire (59) ayant au moins une fente supérieure longitudinale (58) en forme de « V » reposant sur un côté, formant l'élément de pliage (58) et à l'intérieur duquel deux bords libres de film de surenveloppage (F1) sont coulissants jusqu'à l'approche de la première scelleuse longitudinale (42).

9. Machine selon la revendication 8, dans laquelle les moyens de déplacement (60) comprennent des pistes caoutchoutées (60a, 60b) situées sur les côtés opposés de la structure tubulaire (59) ; chacune des pistes (60a, 60b) étant fermées dans un anneau autour d'une paire de poulies motorisées (61) et présentant une pluralité d'orifices (62) sur leur surface sur lesquelles agit une unité (63) permettant de générer une pression négative afin de permettre au film de surenveloppage (F1), interposé entre la structure tubulaire (59) et les pistes (60a, 60b), d'adhérer correctement et d'être acheminé vers l'avant.

10. Machine selon l'une quelconque des revendications précédentes, dans laquelle, en amont de l'extrémité antérieure de la table d'alimentation coulissante (39) en référence à la ligne d'alimentation (L), se trouve une unité de préhension individuelle (38) permettant de positionner les capsules individuelles (2) au niveau de l'extrémité antérieure ; l'unité de préhension individuelle (38) étant équipée d'une pluralité de préhenseurs (38a) permettant de saisir et de relâcher les capsules (2) de façon synchrone.
